# FASCICULE DE BREVET EUROPEEN

(11) **EP 1 121 258 B1**
(45) Date de publication et mention de la délivrance du brevet: **26.09.2007**
(21) Numéro de dépôt: 00956577.1
(22) Date de dépôt: 31.07.2000
(51) Int. Cl.: B60J 7/06

(54) **MODULE DE RECOUVREMENT D'UN HABITACLE AUTOMOBILE ET VEHICULE AUTOMOBILE EQUIPE D'UN TEL HABITACLE**
ABNEHMBARES VERDECKMODUL FÜR DEN FAHRGASTRAUM EINES KRAFTFAHRZEUGES UND KRAFTFAHRZEUG AUSGERÜSTET MIT EINEM SOLCHEN MODUL
DETACHABLE COVER MODULE FOR THE INNER COMPARTMENT OF A MOTOR VEHICLE AND MOTOR VEHICLE FITTED WITH SAID MODULE

(30) Priorité: 24.08.1999 FR 9910718; 24.08.1999 FR 9910720; 24.08.1999 FR 9910721; 24.08.1999 FR 9910715
(43) Date de publication de la demande: 08.08.2001
(73) Titulaire: Peugeot Citroen Automobiles SA, 92200 Neuilly sur Seine (FR)
(72) Inventeur: LEVITRE, Gilles, 92230 Gennevilliers (FR); BOLLE REDDAT, Jean, Christophe, F-92250 La Garenne Colombes (FR)
(74) Mandataire: Gendraud, Pierre
(86) Numéro de dépôt international: PCT/FR2000/002199
(87) Numéro de publication internationale: WO 2001/014158

(56) Documents cités:
- DE-A- 19 604 855
- GB-A- 444 907

## Description

La présente invention concerne un module de recouvrement amovible d'un habitacle de véhicule automobile et un véhicule automobile équipé d'un tel module.

Elle se rapporte plus particulièrement à un module de recouvrement pour véhicule permettant de transformer une berline en un véhicule entièrement découvrable ou en cabriolet.

Quelques définitions sont rappelées ci-après. Une berline est un véhicule automobile à carrosserie fermée avec deux ou quatre portes latérales, offrant au moins quatre places. Un cabriolet est un véhicule automobile équipé d'un pare-brise fixe et d'un toit généralement en toile amovible sans encadrement supérieur de porte, dérivé le plus souvent d'une berline.

On connaît déjà des véhicules du type berline équipés d'un toit rigide escamotable et apte à être rangé (ou plié) dans une partie du coffre de manière manuelle ou électrique pour fermer et ouvrir l'habitacle du véhicule selon les conditions climatiques extérieures. Ce type de toit s'avère coûteux et occupe beaucoup de place dans le coffre en position repliée.

On connaît de GB 444 907, DE 196 04 855 et DE 39 42 746 des véhicules du type berline équipés d'un toit escamotable selon le préambule. De tels véhicules comprennent un module de recouvrement d'un habitacle délimité par une pièce sensiblement en forme d'anneau, fixée à demeure sur la structure du véhicule et sur laquelle est respectivement montée, de manière directe et indirecte, au moins une ridelle supportant une cassette formant « lunette arrière ». Ce type de module de recouvrement ne permet pas de modifier l'aspect d'un véhicule de la configuration berline en véhicule cabriolet.

L'invention a pour but de proposer un dispositif simple à mettre en oeuvre et permettant de modifier très rapidement l'aspect d'un véhicule, de la configuration berline en véhicule découvrable ou en cabriolet et inversement.

A cet effet, l'invention a pour objet un module de recouvrement amovible d'un habitacle de véhicule automobile, caractérisé en ce qu'il comporte au moins une ridelle de pavillon constitué d'une pièce sensiblement en forme d'arceau fixée à chaque côté latéral de la structure du véhicule, ladite ridelle supportant une cassette formant « lunette arrière » du véhicule et un dispositif de toit souple susceptible de coulisser entre deux positions extrêmes respectivement une position repliée sur la cassette et une position dépliée adaptée pour recouvrir l'habitacle du véhicule.

Suivant des caractéristiques de différents modes de réalisation de l'invention :
- la cassette est amovible et apte à être rangée dans un logement réalisé dans le véhicule, lorsque le dispositif de toit est en position extrême replié sur la cassette ;
- la cassette est composée de deux glissières reliées entre elles par deux traverses situées à chaque extrémité des glissières ;
- la cassette est composée de deux brancards reliés par une traverse en partie supérieure sur lesquels sont articulées dans leurs parties supérieures autour d'un axe transversal deux glissières reliées ensemble en partie inférieure par une traverse ;
- une vitre en verre est solidarisée aux glissières articulées dans leur partie supérieure autour de l'axe ;
- au moins un vérin est interposé entre une glissière et un brancard ;
- un mécanisme de verrouillage constitué d'au moins un taquet mobile transversalement est solidaire des glissières constituant la partie mobile de la cassette qui est apte à s'engager dans un évidement réalisé sur le brancard constituant la partie fixe ;
- le dispositif de toit est constitué d'un toit en toile souple à l'intérieur duquel est agencée une pluralité de baleines disposées transversalement par rapport au véhicule, parallèles et équidistantes les unes des autres en position toit déplié, chacune de ses baleines étant munie à ses extrémités libres d'un chariot qui est apte à coulisser longitudinalement dans un profilé réalisé sur chacune des ridelles et dans une glissière disposée de part et d'autre de la cassette prolongeant longitudinalement les profilés ;
- le dispositif de toit est pourvu d'un mécanisme d'entraînement permettant de déplacer le toit en toile agencé sur la cassette ;
- le mécanisme d'entraînement comporte un moteur électrique enroulant ou déroulant un fil coulissant dans les glissières et les profilés relié aux chariots du dispositif de toit ;
- la cassette est munie de moyen d'indexage assurant l'alignement longitudinal entre les profilés des ridelles de pavillon et les glissières de la cassette ;
- le verrouillage de la cassette est assuré d'une part par des verrous situés dans la partie sensiblement supérieure de la cassette de part et d'autre des glissières aptes à s'engager dans la ridelle et d'autre part par des broches situé en partie inférieure de la cassette apte à s'engager dans des orifices réalisés dans la structure du véhicule ;
- la cassette comporte des moyens de guidage reliant la cassette à la structure du véhicule destinés à permettre le démontage de cette dernière et son rangement dans un logement réalisé dans le coffre du véhicule, lorsque le dispositif de toit est en position extrême replié sur la cassette.

Selon une variante de l'invention :
- les moyens de guidage sont constitués de deux bielles disposées respectivement de part et d'autre de la cassette, chacune de ces bielles étant articulée par ses extrémités libre d'une part sur l'un des flancs latéraux de la caisse du véhicule et d'autre part sur la glissière , située au droit du flanc latéral correspondant, sensiblement à son extrémité libre inférieure.
- la cassette comporte un dispositif de compensation constitué d'un vérin télescopique articulé d'une part à une bielle et d'autre part à la structure.

Selon une deuxième variante de l'invention :
- les moyens de guidage sont constitués de deux bras sensiblement verticaux disposés respectivement de part et d'autre de la cassette, chacun de ces bras étant relié fixement par l'une de ses extrémités sensiblement au niveau de la partie médiane de la cassette et est adapté pour être articulé autour d'un axe transversal par son extrémité opposée sur l'un des flancs latéraux de la caisse du véhicule ;
- la cassette comporte un dispositif de compensation constitué d'un ressort hélicoïdal monté coaxialement sur chacun des axes d'articulation des bras, l'une des extrémités du ressort étant liée au bras et l'autre extrémité étant adaptée pour être liée au flanc de la caisse;
selon une troisième variante de l'invention :
- les moyens de guidage sont constitués de deux bielles disposées respectivement de part et d'autre de la cassette chacune de ces bielles étant articulée par ses extrémités libre autour d'un axe transversal d'une part sur la glissière , sensiblement à son extrémité inférieure, et d'autre part sur un axe transversal, formant l'articulation inférieure, solidaire du fond du logement et situé sensiblement dans la partie arrière de ce dernier ;
- les deux bielles sont solidaires l'une de l'autre par l'intermédiaire de leur axe d'articulation respectif désigné articulation inférieure, qui est fermé par un prolongement horizontal des bielles, ce prolongement étant enserré dans deux paliers disposés symétriquement par rapport à un axe longitudinal médian du véhicule, chacun de ces paliers étant solidaire du fond du logement.

L'invention concerne également un véhicule automobile comportant un module de recouvrement tel que mentionné ci-dessus.

Suivant des caractéristiques de différents modes de réalisation de l'invention :
- le véhicule comporte un logement réalisé dans le plancher du véhicule situé dans le compartiment du coffre dans lequel la cassette est apte à être rangée;
- le logement est recouvert par un plancher monté sur des glissières longitudinales ;
- le véhicule comporte un hayon arrière susceptible de pivoter autour d'un axe transversal entre deux positions extrêmes respectivement une position fermée et une position ouverte afin de permettre l'accès à l'habitacle au coffre, caractérisé en ce que le hayon est muni d'une peau extérieure qui est articulée dans sa partie basse autour d'un axe transversal parallèle à l'axe d'articulation du hayon destiné à obstruer un évidement formant coffre pour la cassette ;
- un hayon arrière susceptible de pivoter autour d'un axe transversal entre deux positions extrêmes respectivement une position fermée et une position ouverte afin de permettre l'accès à l'habitacle au coffre, caractérisé en ce que le hayon est muni d'une trappe formant le panneau intérieur de ce dernier qui obstrue un évidemment formant coffre pour la cassette ;
- chacune des ridelles de pavillon est susceptible d'être démontée et est pourvue à l'une de ses extrémités libres d'un mécanisme de fixation avec la structure du véhicule et d'un moyen d'indexage de chaque ridelle avec la structure ;
- chacune des ridelles est montée fixement sur la caisse et articulée dans sa partie médiane suivant un axe sensiblement vertical permettant par pivotement, rapprochement et verrouillage des parties amonts de chacune des ridelles l'une à l'autre la formation d'un arceau de sécurité en cas de retournement.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective d'un véhicule équipé d'un module de recouvrement de l'habitacle selon la présente invention en configuration « berline »;
- les figures 2 et 3 sont des vues analogues à la figure 1 représentant respectivement le véhicule en configuration «découvrabilité partielle» et en configuration «découvrable» ;
- la figure 4 est une vue de côté du toit replié sur l'arrière du véhicule selon une première variante tel que représenté sur la figure 3, illustrant également en silhouette le démontage de la cassette ;
- la figure 5 est une vue de détails à plus grande échelle de la partie cerclée A de la figure 4 ;
- les figures 6 et 7 sont des vues à plus grande échelle respectivement selon les lignes VI-VI et VII-VII de la figure 4 ;
- la figure 8 est une vue en perspective partielle d'un véhicule équipé du toit selon une première variante de l'invention en configuration « découvrable »;
- la figure 9 est une vue de côté du toit replié sur l'arrière du véhicule selon une deuxième variante tel que représenté sur la figure 3, illustrant également en silhouette le démontage de la cassette ;
- la figure 10 est une vue en coupe selon la ligne de la figure 9 ;
- la figure 11 est une vue analogue à la figure 8 en configuration « cabriolet » ;

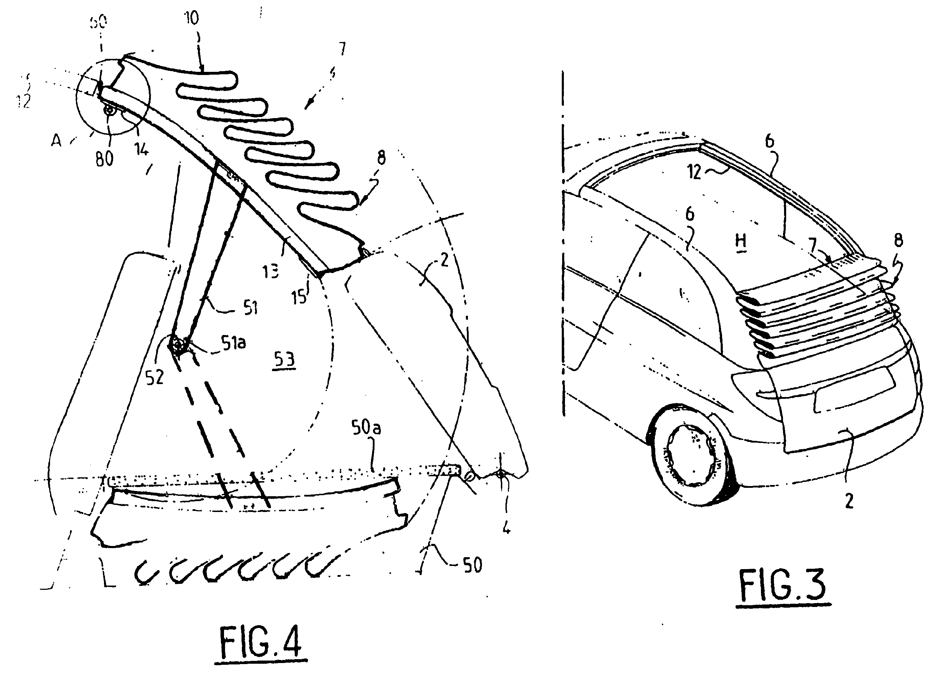

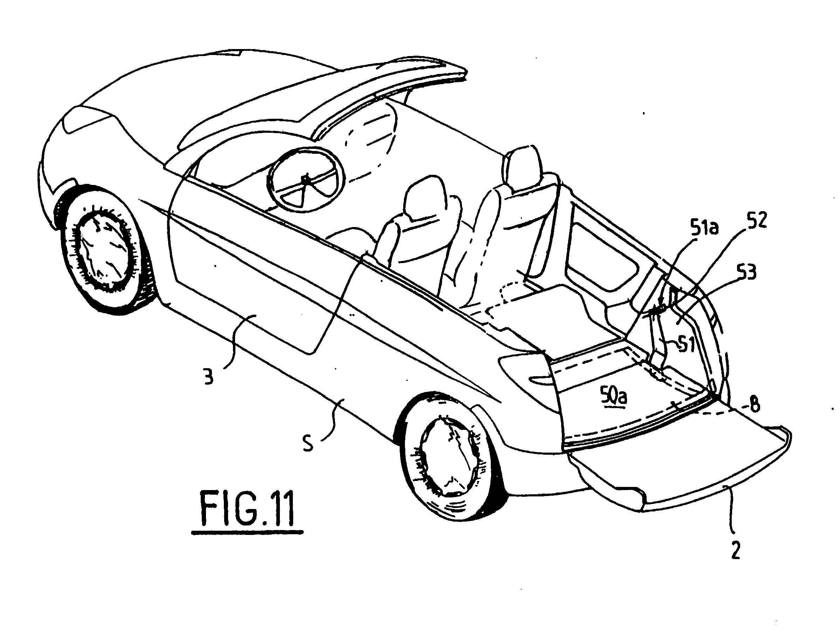

- la figure 11 est une vue analogue à la figure 4 illustrant une variante de réalisation;

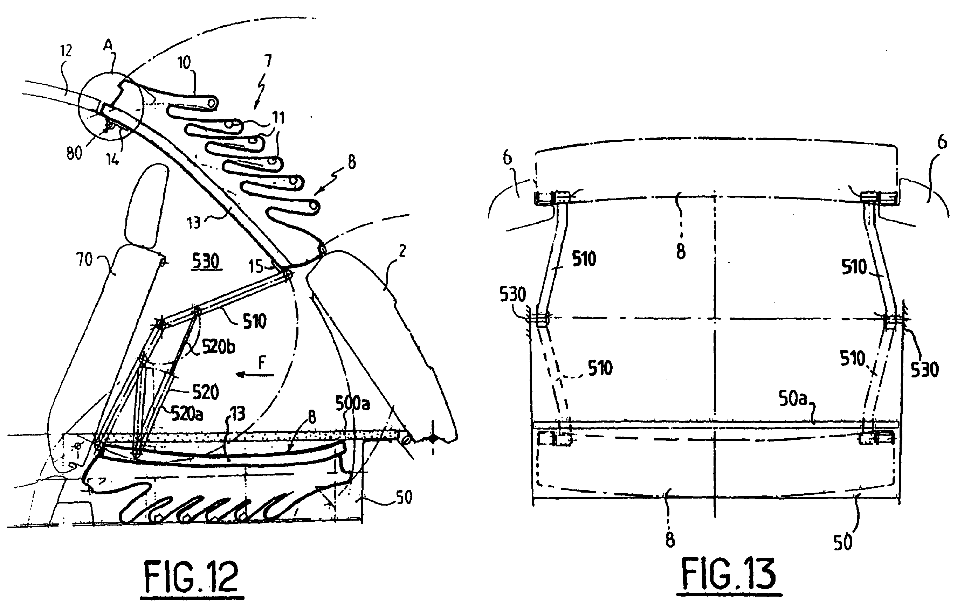

- les figures 12 à 14 sont des vues d'une première variante de côté du toit replié sur l'arrière du véhicule tel que représenté sur la figure 3 et équipé de moyens de guidage comfromes à l'invention, illustrant également le toit en position escamotée dans le coffre;

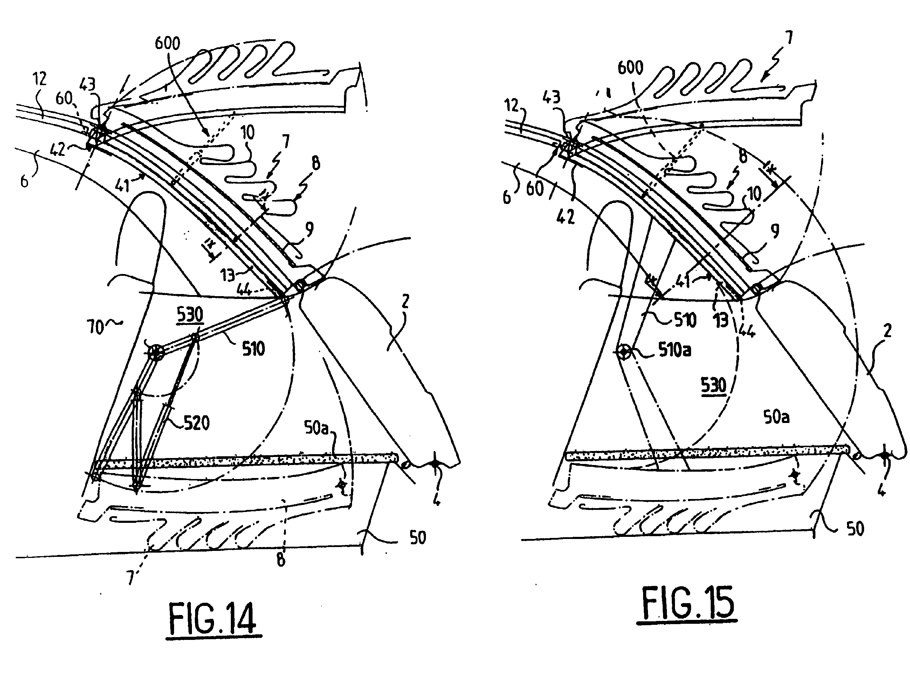

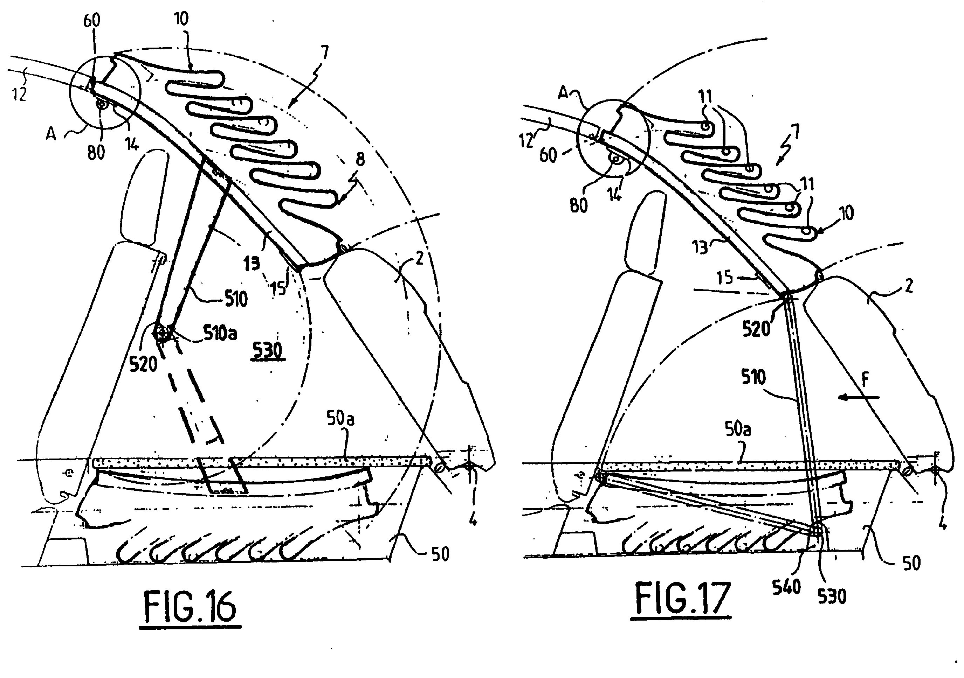

- les figures 15 et 16 sont des vues d'une deuxième variante de côté du toit replié sur l'arrière du véhicule tel que représenté sur la figure 3 et équipé de moyens de guidage comfromes à l'invention, illustrant également le toit en position escamotée dans le coffre;

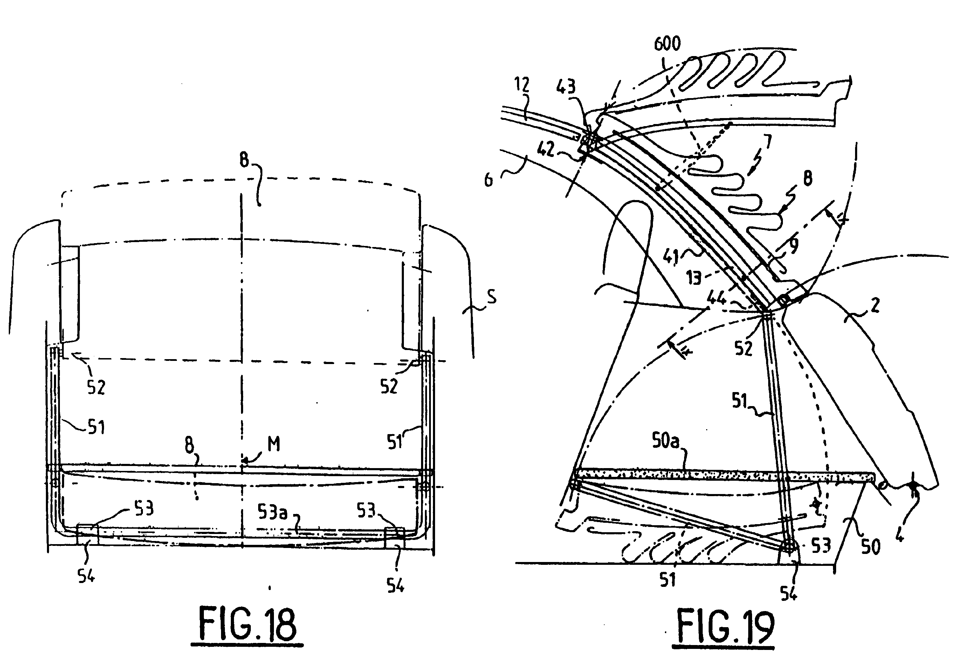

- les figures 17 à 19 sont des vues d'une troisième variante de côté du toit replié sur l'arrière du véhicule tel que représenté sur la figure 3 et équipé de moyens de guidage comfromes à l'invention, illustrant également le toit en position escamotée dans le coffre.

Dans la suite de la description les termes «avant» ou «arrière», sont à considérer par rapport à l'avant ou à l'arrière du véhicule.

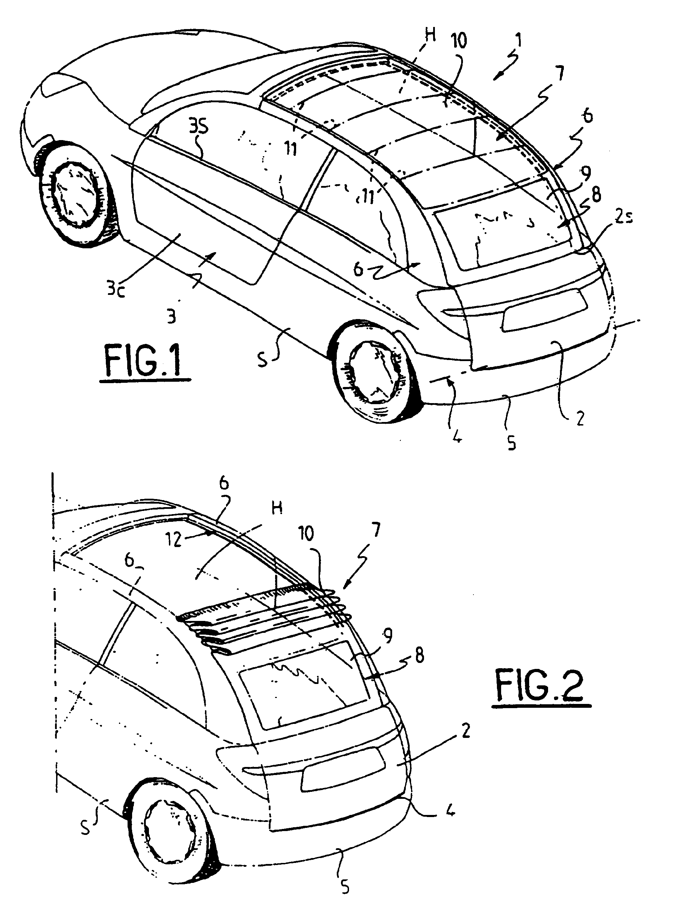

On a représenté sur les figures 1 à 3, un véhicule automobile en configuration berline équipé d'un module 1 de recouvrement amovible de l'habitacle H, d'un hayon 2 arrière et d'au moins une porte latérale 3 pour chaque côte du véhicule de telle sorte que l'accès à l'habitacle H du véhicule automobile soit facilité.

De façon avantageuse, on notera que la partie supérieure 2S du hayon 2 est sensiblement située dans le même plan que la partie supérieure 3S du caisson 3c de chaque porte 3 comme visible aux figures 1 à 3, permettant ainsi d'avoir un véhicule en configuration cabriolet (Figure 1.0) lorsque le module 1 de recouvrement de l'habitacle est complètement retiré.

Dans notre mode de réalisation préféré, le hayon 2 est articulé dans sa partie basse autour d'un axe transversal 4 par rapport au véhicule fixé sur la structure arrière de ce dernier au voisinage du pare-chocs arrière 5.

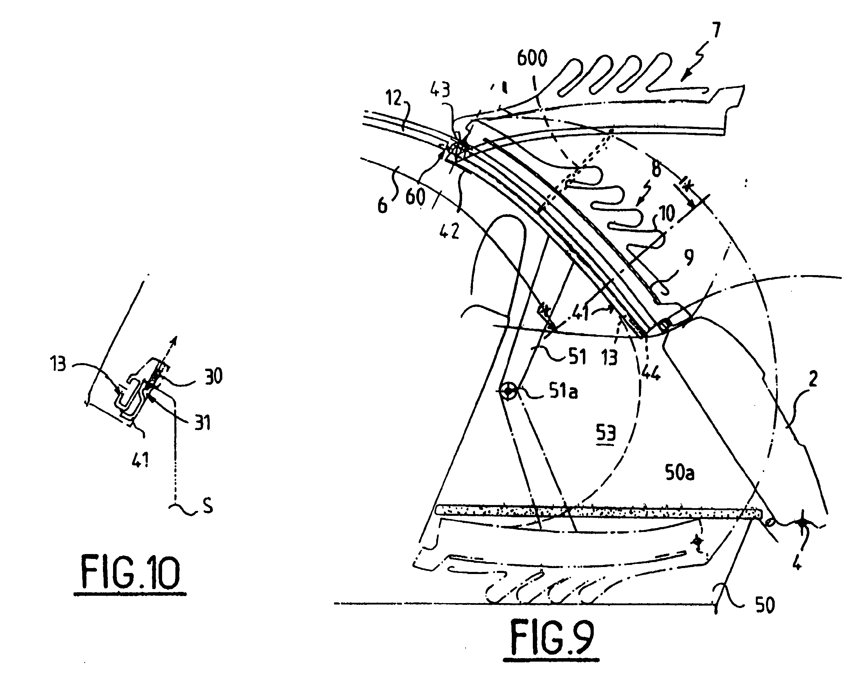

Ce hayon 2 est susceptible de pivoter autour de l'axe 4 transversal entre deux positions extrêmes respectivement une position fermée (Figure 1) et une position ouverte (Figure 10) afin de permettre l'accès à l'habitacle du véhicule et notamment au coffre.

Le module 1 de recouvrement de l'habitacle comporte pour chaque côte latérale du véhicule une ridelle 6 de pavillon amovible constitué d'une pièce sensiblement verticale en forme d'arceau destiné à être fixée à la structure S du véhicule par l'intermédiaire de ses extrémités libres de manière à supporter un dispositif de toit 7 souple découvrable et amovible apte à être rangé à l'intérieur du véhicule selon l'invention, formant pavillon de toit en position dépliée, comme représenté sur la Figure 1, recouvrant ainsi ledit véhicule.

Le module 1 de recouvrement de l'habitacle comporte en outre une cassette 8 amovible située au droit du hayon 2 arrière et fixée également sur les ridelles 6 de pavillon formant ainsi une lunette arrière pour le véhicule en configuration berline comme visible sur la figure 1. On comprend aisément qu'une toile translucide ou un verre 9 est fixé(e) sur la cassette 8 afin de fermer l'habitacle et permettre une vision arrière pour le chauffeur.

Le dispositif de toit 7 est constitué d'un toit en toile souple 10 à l'intérieur duquel est agencé de manière connue une pluralité de baleines 11 disposées transversalement par rapport au véhicule, parallèles et équidistantes les unes des autres en position toit déplié (figure 1). Chacune de ses baleines est munie à ses extrémités libres d'un chariot, non représenté, mobile longitudinalement dans un profilé 12 réalisé sur chacune des ridelles 6 et situé dans la partie de la ridelle 6 sensiblement horizontale.

Avantageusement, la cassette 8 est composée de deux glissières 13 reliées entre elles par deux traverses 14 et 15 situées à chaque extrémité des glissières 13, comme visible sur la figure 4. Chacune des glissières 13 de la cassette 8 prolonge longitudinalement les profilés 12 de chacune des ridelles 6 de pavillon de manière à permettre aux chariots de chaque baleine 11 leurs déplacement longitudinal sur cette cassette 8, et ainsi obtenir une découvrabilité totale de l'habitacle du véhicule, comme représenté à la Figure 3.

Chaque chariot est déplacé longitudinalement dans le profilé 12 et la glissière 13 soit de manière manuelle par l'utilisateur en déplaçant l'extrémité avant du toit toile vers l'arrière, soit de manière électrique par l'intermédiaire par exemple d'un fil, non représenté, relié au chariot d'extrémité, guidé dans le profilé 12 et la glissière 13 et entraîné dans un déplacement longitudinal par l'intermédiaire d'un moteur électrique commandé par un interrupteur situé par exemple au poste de commande, enroulant ou déroulant ledit fil selon la manoeuvre désirée par l'utilisateur, ouverture ou fermeture du toit. On notera que dans la variante électrique, non représenté en détail, le moteur électrique est avantageusement situé dans la partie inférieure médiane de la cassette 8.

On décrira maintenant plus en détail la fixation de la cassette, en relation avec les figures 4 à 10.

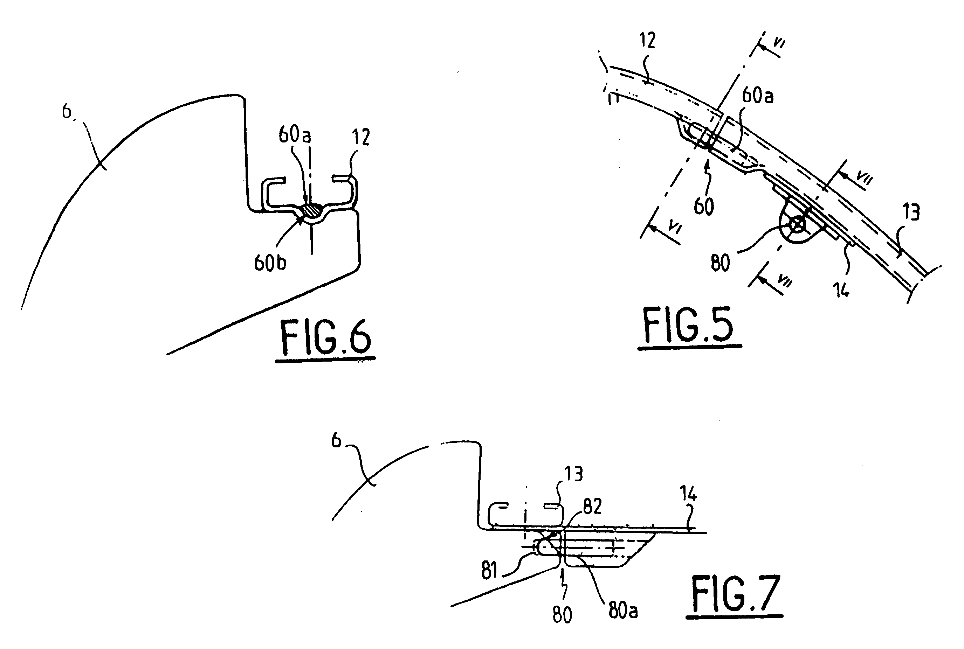

De manière à permettre le montage et le démontage manuels de ladite cassette 8, cette dernière comporte dans sa partie supérieure respectivement pour chaque glissière 13, une broche 16,17 située aux extrémités de chacune d'elles qui coopère respectivement avec un orifice 18 réalisé sur la structure S du véhicule au voisinage de l'aile arrière pour les broches 16 situées dans la partie inférieure de la cassette représentée à la figure 7 et avec un logement 19 réalisé dans le fond du profilé 12 agencé sur chaque ridelle 6, comme visible sur les figures 5 et 6, assurant ainsi un indexage entre les profilés 12 des ridelles 6 et les glissières 13 de la cassette 8.

On comprend aisément que le montage s'effectue par l'engagement préalable des broches 16 inférieures dans leurs orifices 18 respectifs puis par basculement vers l'avant du véhicule de la cassette 8 jusqu'à ce que les broches 17 supérieures reposent dans le fond du logement 19.

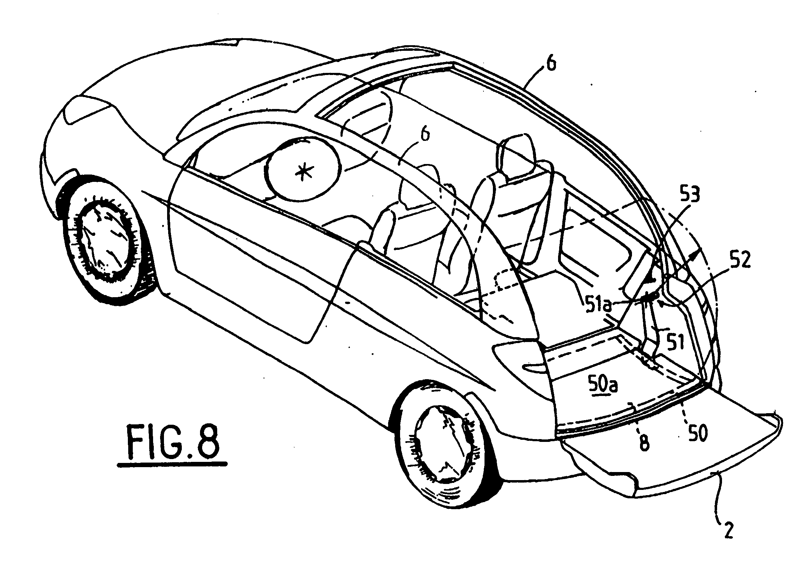

Le verrouillage de la cassette 8 est assuré avantageusement par des verrous 20 constitués par exemple d'un pion 21 transversal situé dans la partie sensiblement supérieure de la cassette de part et d'autre des glissières 13, qui se verrouille automatiquement lors du montage de celle-ci dans la ridelle 6 avantageusement par la coopération de l'extrémité 21a du pion 21 qui est mobile transversalement avec une rampe 22 réalisée sur la ridelle 6, comme représenté à la figure 8, déplaçant ainsi ledit pion 21 par le poids de la cassette 8.

Le déverrouillage de cesdits verrous 20 s'effectue par un mécanisme du type à bouton poussoir relié par un câble sous gaine aux pions 21 afin de déplacer ces derniers sous un effort contraire au ressort de rappel, non représenté, monté coaxialement au pion.

Le démontage de cette cassette 8 s'effectue en effectuant à l'inverse les opérations décrites ci-dessus.

On notera que le montage et le démontage de la cassette 8 ne s'effectuent que si le toit 10 toile est entièrement replié sur cette dernière 8, comme visible sur la Figure 3.

La cassette 8 ainsi démontée et pourvue du toit toile 10 et de son mécanisme d'entraînement (baleine, chariot...) est avantageusement disposée dans un logement 30 réalisé dans le plancher du véhicule. Ce logement 30 est recouvert d'un plancher 31 qui est monté sur des glissières longitudinales, non représenté, de manière à permettre aisément l'ouverture et la fermeture de celui-ci et obtenir un seuil de chargement entièrement plat.

On a représenté sur la Figure 10 une illustration de la cassette 8 rangée dans son logement 30.

Selon une variante de réalisation de la présente invention, la cassette 8 est composée de deux brancards 41 reliés par une traverse 42 en partie supérieure sur lesquels sont articulées dans leurs parties supérieures autour d'un axe 43 transversal deux glissières 13 reliées ensembles en partie inférieure par une traverse 44. Une vitre 9 en verre est solidarisée aux glissières 13 articulées dans leur partie supérieure autour de l'axe 43 permettant ainsi un accès aisé au coffre sans ouvrir le hayon 2.

De façon similaire, au premier mode de réalisation décrit ci-dessus, chacune des glissières 13 de la cassette 8 prolonge longitudinalement les profilés 12 de chacune des ridelles 6 de pavillon de manière à permettre aux chariots de chaque baleine 11 leurs déplacements longitudinaux sur cette cassette 8 et ainsi obtenir une découvrabilité totale de l'habitacle du véhicule, comme visible sur la figure 9.

Dans une telle configuration, le toit souple 10 entièrement plié sur la cassette 8, l'ouverture de celle-ci est toujours possible, le mécanisme d'ouverture et de fermeture sera expliqué plus en détail dans la suite de la description.

En configuration de fonctionnement électrique du toit, le moteur électrique est disposé dans la partie médiane de la traverse reliant chacune des glissières 13 et constituant la partie mobile de la cassette 8.

La fixation de la cassette 8 sur les ridelles 6 et la structure du véhicule est réalisée de manière similaire au premier mode de réalisation, à la seule différence que les broches sont solidaires des brancards 41 ainsi que le moyen de verrouillage 20 qui est fixé à la traverse 42 solidaire des brancards 41.

Afin de simplifier la description les pièces identiques au premier mode de réalisation sont suivies de la même référence numérique.

Afin de verrouiller les glissières 13 aux brancards 41, un mécanisme de verrouillage constitué d'au moins un taquet 50 ou pion mobile transversalement est solidaire des glissières 13 constituant la partie mobile de la cassette 8 qui est apte à s'engager dans un évidemment 51 réalisé sur le brancard 41 constituant la partie fixe, comme illustré sur la figure 12.

Le taquet 50 ou pion est déplaçable, de manière connue, par un mécanisme du type, à bouton poussoir relié audit taquet par un câble sous gaine, non représenté.

De manière avantageuse, au moins un vérin 60 comme visible à la figure 11 est interposé entre une glissière 13 et un brancard 41 afin d'assurer le maintien en position ouverte de la partie mobile et assister l'opérateur lors de l'ouverture de celle-ci.

Dans notre mode de réalisation, un vérin 60 est interposé de chaque côté de la partie mobile.

Le montage et le démontage de la cassette 8 pourvue du toit souple 10 replié sur celle-ci s'effectuent de la même façon que celle décrite ci-dessus, de même, le rangement de la cassette s'effectue dans le logement 30 du coffre tel que mentionné plus haut.

Selon un autre mode de réalisation de l'invention, la cassette 8 pourvue du toit 10 en toile souple replié est apte à être démontée comme mentionné ci-dessus et à être rangée à l'intérieur du hayon 2 arrière, tel que représenté aux figures 14 et 16.

A cet effet, le hayon 2 est muni d'une peau extérieure 70 qui est articulée dans sa partie basse autour d'un axe 71 transversal parallèle à l'axe d'articulation 4 du hayon destiné à obstruer un évidemment 72 former par la paroi interne 72 du hayon 2 et les parois latérales 73 de celui-ci.

L'évidement 72 est en outre pourvu de deux orifices 74 sensiblement situés sur une paroi horizontale 75 qui sont destinés à recevoir lors du rangement de la cassette 8 dans cet évidemment 72 les deux broches inférieures 16 de celle-ci.

On notera qu'un moyen de verrouillage du type à barillet de la peau extérieure du hayon sur le panneau intérieur de celui-ci peut être agencé.

Avantageusement, un tel dispositif de rangement de la cassette 8 dans le hayon 2 permet de réaliser la transformation de la configuration berline en configuration véhicule découvrable entièrement dans le cas de figure où le coffre du véhicule est encombré d'objets.

Selon une autre variante de rangement de la cassette représenté à la figure 15, la cassette est apte à être rangée à l'intérieur du hayon. Dans ce mode réalisation, l'accès à l'évidemment 72 réalisé dans le hayon 2 s'effectue par une trappe 80 formant le panneau intérieur de ce dernier.

Ainsi, le rangement de la cassette 8 s'effectue en ouvrant préalablement le hayon 2 arrière à l'horizontale puis en soulevant le panneau intérieur 80 afin de dégager l'évidemment 72 et de loger la cassette 8. Par la suite, le panneau intérieur 80 puis le hayon 2 peuvent être fermés, afin d'obtenir un aspect de véhicule entièrement découvrable.

Les deux variantes de rangement décrites ci-dessus permettent avantageusement de réaliser un logement de taille plus importante pour la cassette que dans les réalisations de rangement de la cassette 8 dans le coffre.

Une fois la cassette 8 démontée et rangée dans le véhicule, chacune des ridelles 6 de pavillon est susceptible d'être démontée afin de transformer le véhicule en configuration cabriolet (Figure 10).

Avantageusement, un moyen d'indexage 60 est situé à l'extrémité supérieure de chaque glissière 13 afin de permettre un alignement entre les profilés 12 des ridelles 6 et les glissières 13 de la cassette 8. Ce moyen d'indexage 60 est constitué d'une broche 60a qui coopère avec un logement 60b réalisé dans le fond des profilés 12, comme représenté sur la figure 6.

Selon une première variante le module de recouvrement est équipé de moyens de guidage reliant la cassette à la structure du véhicule destinés à permettre le démontage de cette dernière et son rangement dans un logement réalisé dans le coffre du véhicule, lorsque le dispositif de toit est en position extrême replié sur la cassette, les moyens de guidage 510 sont constitués de deux bielles disposées respectivement de part et d'autre de la cassette 8. Chacune de ces bielles 510 est articulée par ses extrémités libre d'une part sur l'un des flancs latéraux 530 de la caisse du véhicule et d'autre part sur la glissière 13, située au droit du flanc latéral 53, correspondant sensiblement à son extrémité libre inférieure (Figure 17).

On notera que l'articulation de la bielle 510 sur l'un des flancs de la caisse se situe à l'arrière du dossier 70 d'un siège arrière.

Le dispositif de compensation 520 est avantageusement constitué d'un vérin télescopique associé à chaque bielle 510, et pourvu de manière classique d'un corps 520a articulé au flanc 530 de la caisse à l'intérieur duquel coulisse une tige 520b dont son extrémité est reliée à la bielle 510 correspondante. Un tel dispositif permet d'assister l'utilisateur dans la manipulation de la cassette 8 lors de son rangement ou de sa fixation.

Selon une deuxième variante, les moyens de guidage 510 sont constitués de deux bras sensiblement verticaux disposés respectivement de part et d'autre de la cassette 8. Chacun de ces bras 510 est relié fixement par l'une de ses extrémités sensiblement au niveau de la partie médiane de la glissière 13 et est articulé autour d'un axe 510a par son extrémité opposée sur l'un des flancs latéraux 530 de la caisse du véhicule correspondant.

Le dispositif de compensation 520 est constitué, avantageusement, d'un ressort hélicoïdal monté coaxialement sur chacun des axes d'articulation 510a des bras 510. L'une des extrémités du ressort est liée au bras et l'autre extrémité étant lié au flanc de la caisse, comme schématisé sur la figure 21.

Un tel dispositif permet d'assister l'utilisateur dans la manipulation de la cassette lors de son rangement ou de sa fixation sur les ridelles de pavillon.

Selon une troisième variante, les moyens de guidage 51 sont constitués de deux bielles disposées respectivement de part et d'autre de la cassette 8. Chacune de ces bielles 51 est articulée par ses extrémités libre autour d'un axe transversal 52 d'une part sur la glissière 13, sensiblement à son extrémité inférieure, comme représenté sur les Figures 4 et 9, et d'autre part sur un axe transversal 53, formant l'articulation inférieure, solidaire du fond du logement 50 réalisé sous le faux plancher et situé sensiblement dans la partie arrière de ce dernier.

De manière avantageuse, les deux bielles 51 sont solidaires l'une de l'autre par l'intermédiaire de leur axe d'articulation 53 respectif désigné articulation inférieure, qui est fermé par un prolongement horizontal 53a des bielles 51. Ce prolongement 53a est enserré dans deux paliers 54 disposés symétriquement par rapport à l'axe longitudinal médian M du véhicule, comme représenté sur la figure 9, chacun de ces paliers 54 étant solidaire du fond du logement 50.

A cet effet, chacune des ridelles est pourvue au moins à l'une de ses extrémités libres d'un mécanisme de fixation avec la structure du véhicule et d'un moyen d'indexage de chaque ridelle avec la structure.

On notera par exemple que le mécanisme de fixation est constitué d'un système classique de verrouillage avec l'un des montants du pare-brise du type à grenouillère.

Le mécanisme de fixation et le moyen d'indexage de chaque ridelle ne seront pas décrits plus en détail dans la suite de la description.

Chacune des ridelles 6 est ainsi apte a être démontée du véhicule pour être stockée dans un endroit clos, par exemple un garage.

On comprend aisément à la lecture de la description ci-dessus de l'invention des différents modes de réalisation et que le module 1 de recouvrement selon la présente invention permet avantageusement de modifier de manière simple et rapide l'aspect d'une berline à une configuration véhicule sans plafond puis éventuellement en un cabriolet.

Bien entendu, l'invention n'est pas limitée aux modes de réalisation qui ont été décrits ; on pourrait au contraire concevoir diverses variantes sans sortir du cadre de l'invention. C'est ainsi par exemple, que chacune des ridelles 6 peut être montée fixement sur la caisse et articulée dans sa partie médiane suivant un axe sensiblement vertical afin de permettre par pivotement, rapprochement et verrouillage des parties amonts de chacune des ridelles l'une à l'autre de manière à former un arceau de sécurité en cas de retournement, pour la configuration cabriolet.

## Revendications

1. Véhicule automobile comportant un module de recouvrement amovible d'un habitacle comportant au moins une ridelle (6) de pavillon constituée d'une pièce sensiblement en forme d'arceau fixée à chaque côté latéral de la structure du véhicule, chacune des ridelles (6) supportant une cassette (8) formant « lunette arrière» du véhicule et un dispositif de toit souple (7) susceptible de coulisser entre deux positions extrêmes respectivement une position repliée sur la cassette (8) et une position dépliée adaptée pour recouvrir l'habitacle du véhicule, chacune des ridelles est montée de façon amovible sur la structure du véhicule pour pouvoir en être démontés,
la cassette (8) est amovible et apte à être rangée dans un logement réalisé dans le véhicule lorsque le dispositif de toit est en position extrême repliée sur la cassette (8),
**caractérisé en ce que** la cassette (8) est composée de deux brancards (41) relies par une traverse (42) en partie supérieure sur lesquels sont articulées dans leurs parties supérieures autour d'un axe (43) transversal deux glissières (13) reliées ensemble en partie inférieure par une traverse (44).

2. Véhicule selon la revendication 1, **caractérisé en ce que** la cassette (8) comprend une vitre (9) en verre, ladite vitre étant montée de façon solidaire aux glissières (13) de la cassette.

3. Véhicule selon la revendication 1 ou 2,
**caractérisé en ce que** la cassette (8) comprend au moins un vérin (60) interposé entre les glissières (13) et les brancards (41) de la cassette.

4. Véhicule selon l'une des revendications 1 à 3
**caractérisé en ce que** la cassette (8) comprend un mécanisme de verrouillage constitué d'au moins un pion (50) monté de façon mobile transversalement sur les glissières (13) formant une partie mobile de la cassette, ledit pion (50) étant monté solidaire des glissières et apte à s'engager dans un évidement (51) réalisé sur le brancard (41) formant une partie fixe de la cassette.

5. Véhicule selon l'une quelconque des revendications précédentes, **caractérisé en ce que** le dispositif de toit (7) est constitué d'un toit en toile souple (10) à l'intérieur duquel est agencé une pluralité de baleines (11) disposées transversalement par rapport au véhicule, parallèles et equidistantes les unes des autres en position toit déplie, chacune de ses baleines étant munie à ses extrémités libres d'un chariot qui est apte à coulisser longitudinalement dans un profile (12) réalisé sur chacune des ridelles (6) et dans une glissière (13) disposée de part et d'autre de la cassette (8) prolongeant t longitudinalement les profiles (12).

6. Véhicule selon la revendication 5, **caractérisé en ce que** le dispositif de toit est pourvu d'un mécanisme d'entraînement permettant de déplacer le toit en toile agence sur la cassette (8).

7. Véhicule selon la revendication 6, **caractérisé en ce que** le mécanisme d'entraînement comporte un moteur électrique enroulant ou déroulant un fil coulissant dans les glissières (13) et les profilés (12), ledit fil étant relié aux chariots du dispositif de toit.

8. Véhicule selon l'une quelconque des revendications 5 à 7 **caractérisé en ce que** la cassette (8) est munie de moyens d'indexage (17, 19) assurant l'alignement longitudinal entre les profilés (12) des ridelles de pavillon (6) et les glissières (13) de la cassette (8).

9. Véhicule selon l'un quelconque des revendications 1 à 8, **caractérise en ce qu'**il comprend un moyen de verrouillage de la cassette (8) sur les ridelles (6), ledit moyen de verrouillage comprenant au moins un pion (21) situé dans une partie supérieur de la cassette et destiné à coopérer avec une rampe (22) réalisé sur les ridelles, ainsi que des broches (16) situées dans des parties supérieure et inférieure de la cassette et destinées à coopérer avec des orifices réalisés sur la structure du véhicule.

10. Véhicule selon l'une quelconque des revendications précédentes, **caractérisé en ce que** la cassette (8) comporte des moyens de guidage (510) reliant la cassette (8) à la structure du véhicule destines à permettre le démontage de cette dernière et son rangement dans un logement réalise dans le coffre du véhicule, lorsque le dispositif de toit est en position extrême replié sur la cassette (8).

11. Véhicule selon la revendication 10, **caractérisé en ce que** les moyens de guidage (510) sont constitués de deux bielles disposées respectivement de part et d'autre de la cassette (8), chacune de ces bielles (510) étant articulée par ses extrémités libre d'une part sur l'un des flancs latéraux (530) de la caisse du véhicule et d'autre part sur la glissière (13), l'extrémité libre inférieur de chaque glissière (13) étant disposée sensiblement au droit d'un des flancs latéraux (530) correspondant.

12. Véhicule selon la revendication 10 ou 11 **caractérisé en ce que** la cassette (8) comporte un dispositif de compensation (520) constitué d'un vérin télescopique articulé d'une part à une bielle (510) et d'autre part à la structure.

13. Véhicule selon la revendication 10, **caractérisé en ce que** les moyens de guidage (510) sont constitués de deux bras sensiblement verticaux disposes respectivement de part et d'autre de la cassette, chacun de ces bras étant relié fixement par l'une de ses extrémités sensiblement au niveau de la partie médiane de la cassette et est adapte pour être articulé autour d'un axe transversal (510a) par son extrémité opposée sur l'un des flancs latéraux (53) de la caisse du véhicule.

14. Véhicule selon la revendication 10 ou 13, **caractérisé en ce que** la cassette (8) comporte un dispositif de compensation (520) constitué d'un ressort hélicoïdal monté coaxialement sur chacun des axes d'articulation des bras, l'une des extrémités du ressort étant liée au bras et l'autre extrémité étant adaptée pour être liée au flanc de la caisse.

15. Véhicule selon la revendication 10, **caractérisé en ce que** les moyens de guidage (510) sont constitués de deux bielles disposées respectivement de part et d'autre de la cassette (8), chacune de ces bielles (510) étant articulée par ses extrémités libre autour d'un axe transversal (520) d'une part sur la glissière (13), sensiblement à son extrémité inférieure, et d'autre part sur un axe transversal (530), formant l'articulation inférieure, solidaire du fond du logement (50) et situé sensiblement dans la partie arrière de ce dernier.

16. Véhicule selon la revendication 10 ou 15 **caractérisé en ce que** les deux bielles (510) sont solidaires l'une de l'autre par l'intermédiaire de leur axe d'articulation (530) respectif désigné articulation inférieures qui est fermé par un prolongement horizontal (530a) des bielles (510), ce prolongement (530a) étant enserré dans deux paliers (540) disposés symétriquement par rapport à un axe longitudinal médian du véhicule, chacun de ces paliers (540) étant solidaire du fond du logement (50).

17. Véhicule selon l'une quelconque des revendications précédentes, **caractérisé en ce qu'**il comporte un logement (30) réalisé dans le plancher du véhicule situé dans le compartiment du coffre dans lequel la cassette (8) est apte à à être rangée.

18. Véhicule selon la revendication 17, **caracterisé en ce que** le logement (30) est recouvert par un faux plancher monté sur des glissières longitudinales.

19. Véhicule selon la revendication 17 ou 18, **caractérisé en ce que** chacune des ridelles (6) de pavillon est susceptible d'être démontée et est pourvue à 5 l'une de ses extrémités libres d'un mécanisme de fixation avec la structure du véhicule et d'un moyen d'indexage de chaque ridelle avec la structure.

20. Véhicule selon l'une quelconque des revendications 17 à 19, **caractérisé en ce que** chacune des ridelles (6) est montée fixement sur la caisse et articulée dans sa partie médiane suivant un axe sensiblement vertical permettant par pivotement, rapprochement et verrouillage des parties amonts de chacune des ridelles (6) l'une à l'autre la formation d'un arceau de sécurité en cas de retournement.

## Claims

1. Motor vehicle comprising a detachable covering module for a passenger compartment comprising at least one roof side panel (6) consisting of a part generally in the form of a roll bar attached to each lateral side of the structure of the vehicle, each one of the side panels (6) supporting a cassette (8) forming a "rear window" of the vehicle and a flexible roof device (7) which is able to slide between two maximum positions, respectively a folded position on the cassette (8) and an unfolded position arranged to cover the passenger compartment of the vehicle, each one of the side panels being mounted detachably on the structure of the vehicle in order to be able to be removed from it, the cassette (8) being detachable and able to be stowed in a recess made in the vehicle when the roof device is in the maximum folded position on the cassette (8),
**characterized in that** the cassette (8) is composed of two side members (41) connected by a cross member (42) in the upper portion to which are hinged in their upper portions about a transverse hinge pin (43) two guide rails (13) connected together in the lower portion by a cross member (44).

2. Vehicle according to Claim 1, **characterized in that** the cassette (8) includes a glass window (9), the said window being mounted so that it is connected to the guide rails (13) of the cassette.

3. Vehicle according to Claim 1 or 2, **characterized in that** the cassette (8) includes at least one jack (60) placed between the guide rails (13) and the side members (41) of the cassette.

4. Vehicle according to one of Claims 1 to 3, **characterized in that** the cassette (8) includes a locking mechanism consisting of at least one peg (50) mounted such that it can move transversely on the guide rails (13) forming a moving portion of the cassette, the said peg (50) being mounted connected to the guide rails and able to engage in a cutout (51) made in the side member (41) forming a fixed portion of the cassette.

5. Vehicle according to any one of the preceding claims, **characterized in that** the roof device (7) consists of a flexible cloth roof (10) inside which is arranged a series of thin rods (11) disposed transversely in relation to the vehicle, parallel and equidistant from each other in the folded roof position, each one of its thin rods being provided at its free ends with a carrier which is able to slide longitudinally in a metal section (12) made on each one of the side panels (6) and in a guide rail (13) disposed on each side of the cassette (8) extending the metal sections (12) longitudinally.

6. Vehicle according to Claim 5, **characterized in that** the roof device is provided with a drive mechanism for moving the cloth roof arranged on the cassette (8).

7. Vehicle according to Claim 6, **characterized in that** the drive mechanism comprises an electric motor winding up or unwinding a cord sliding in the guide rails (13) and the metal sections (12), the said cord being connected to the carriers of the roof device.

8. Vehicle according to any one of Claims 5 to 7, **characterized in that** the cassette (8) is provided with means of aligning (17, 19), providing the longitudinal alignment between the metal sections (12) of the roof side panels (6) and the guide rails (13) of the cassette (8).

9. Vehicle according to any one of Claims 1 to 8, **characterized in that** it includes a means of locking the cassette (8) on the side panels (6), the said means of locking including at least one peg (21) located in an upper portion of the cassette and intended to cooperate with a rail (22) made on the side panels, as well as pins (16) located in the upper and lower portions of the cassette and intended to cooperate with holes made in the structure of the vehicle.

10. Vehicle according to any one of the preceding claims, **characterized in that** the cassette (8) comprises guiding means (510) connecting the cassette (8) to the structure of the vehicle, intended to allow the removal thereof and its stowage in a recess made in the boot of the vehicle, when the roof device is in the maximum folded position on the cassette (8).

11. Vehicle according to Claim 10, **characterized in that** the guiding means (510) consist of two bars disposed respectively on each side of the cassette (8), each one of these bars (510) being hinged by its free ends on the one hand to one of the lateral sides (530) of the body of the vehicle and on the other hand to the guide rail (13), the lower free end of each guide rail (13) being disposed generally aligned vertically with one of the corresponding lateral sides (530).

12. Vehicle according to Claim 10 or 11, **characterized in that** the cassette (8) comprises a counterbalancing device (520) consisting of a telescopic jack hinged on the one hand to a bar (510) and on the other hand to the structure.

13. Vehicle according to Claim 10, **characterized in that** the guiding means (510) consist of two generally vertical arms disposed respectively on each side of the cassette, each one of these arms being permanently connected by one of its ends generally at the central portion of the cassette and arranged to be hinged about a transverse hinge pin (510a) by its opposite end to one of the lateral sides (53) of the body of the vehicle.

14. Vehicle according to Claim 10 or 13, **characterized in that** the cassette (8) comprises a counterbalancing device (520) consisting of a helical spring mounted coaxially on each one of the hinge pins of the arms, one of the ends of the spring being connected to the arm and the other end being arranged to be connected to the side of the body.

15. Vehicle according to Claim 10, **characterized in that** the guiding means (510) consist of two bars disposed respectively on each side of the cassette (8), each one of these bars (510) being hinged by its free ends about a transverse hinge pin (520) on the one hand to the guide rail (13), generally at its lower end, and on the other hand to a transverse hinge pin (530), forming the lower hinge, connected to the bottom of the recess (50) and located generally in the rear portion thereof.

16. Vehicle according to Claim 10 or 15, **characterized in that** the two bars (510) are connected one to the other by means of their respective hinge pin (530), designated lower hinge, which is closed by a horizontal extension (530a) of the bars (510), this extension (530a) being held in two bearings (540) disposed symmetrically in relation to a longitudinal centre line of the vehicle, each one of these bearings (540) being connected to the bottom of the recess (50).

17. Vehicle according to any one of the preceding claims, **characterized in that** it comprises a recess (30) made in the floor of the vehicle located in the boot compartment in which the cassette (8) is able to be stowed.

18. Vehicle according to Claim 17, **characterized in that** the recess (30) is covered by a false floor mounted on longitudinal guide rails.

19. Vehicle according to Claim 17 or 18, **characterized in that** each of the roof side panels (6) can be removed and is provided at one of its free ends with a mechanism for attaching to the structure of the vehicle and a means of aligning each side panel with the structure.

20. Vehicle according to any one of Claims 17 to 19, **characterized in that** each one of the side panels (6) is permanently mounted on the body and hinged in its central portion along a generally vertical axis allowing by pivoting, joining and locking the forward portions of each one of the side panels (6) one to the other the formation of a safety roll bar if the vehicle overturns.

## Patentansprüche

1. Kraftfahrzeug, umfassend ein abnehmbares Verdeckmodul für den Fahrgastraum, umfassend mindestens eine Dachreling (6), die aus einem im Wesentlichen bügelförmigen Teil besteht, das auf jeder Querseite der Fahrzeugstruktur angebracht ist, wobei jede der Relingen (6) eine Kassette (8) trägt, die eine "Heckscheibe" des Fahrzeugs formt, und eine Stoffdach-Vorrichtung (7), die zwischen zwei Endpositionen verschiebbar ist, jeweils einer auf der Kassette (8) zusammengefalteten Position und einer auseinander gefalteten Position, die geeignet ist, den Fahrgastraum zu bedecken, wobei jede der Relingen auf abnehmbare Weise auf der Fahrzeugstruktur montiert ist, um davon abmontiert werden zu können, die Kassette (8) abnehmbar und geeignet ist, in einer im Fahrzeug vorgesehene Aufnahme untergebracht zu werden, wenn die Dachvorrichtung sich in der auf der Kassette (8) zusammengefalteten Position befindet, **dadurch gekennzeichnet, dass** die Kassette (8) aus zwei Längsträgern (41) besteht, die durch einen Querträger (42) im Oberteil verbunden sind, an deren Oberteil zwei Laufschienen (13) um eine Querachse (43) herum angelenkt sind, die im Unterteil durch einen Querträger (44) miteinander verbunden sind.

2. Fahrzeug nach Anspruch 1, **dadurch gekennzeichnet, dass** die Kassette (8) eine Scheibe (9) aus Glas aufweist, wobei diese Scheibe mit den Laufschienen (13) der Kassette fest verbunden ist.

3. Fahrzeug nach Anspruch 1 oder 2, **dadurch gekennzeichnet, dass** die Kassette (8) mindestens eine Hubvorrichtung (60) aufweist, die zwischen den Laufschienen (13) und den Längsträgern (41) der Kassette angeordnet ist.

4. Fahrzeug nach einem der Ansprüche 1 bis 3, **dadurch gekennzeichnet, dass** die Kassette (8) einen Verriegelungsmechanismus aufweist, der aus mindestens einem Bolzen (50) besteht, der auf in der Querrichtung bewegliche Weise an den Laufschienen (13) befestigt ist, der einen beweglichen Teil der Kassette formt, wobei dieser Bolzen (50) mit den Laufschienen verbunden ist und in eine Aussparung (51) eingreifen kann, die auf dem Längsträger (41) hergestellt ist, der einen feststehenden Teil der Kassette formt.

5. Fahrzeug nach einem der vorherigen Ansprüche, **dadurch gekennzeichnet, dass** die Dachvorrichtung (7) aus einem Stoffdach (10) besteht, dessen Inneres eine Vielzahl von relativ zum Fahrzeug quer liegenden, parallelen und in der auseinander gefalteten Dachposition voneinander gleich beabstandeten Streben (11) angeordnet sind, wobei jede dieser Streben an ihren freien Enden mit einem Schlitten versehen ist, der geeignet ist, entlang der Längsrichtung in einem Profil (12) zu gleiten, das auf jeder der Relingen (6) vorgesehen ist, und in einer Laufschiene (13), die beiderseits der Kassette (8) angeordnet ist, wobei sie die Profile (12) in der Längsrichtung verlängert.

6. Fahrzeug nach Anspruch 5, **dadurch gekennzeichnet, dass** die Dachvorrichtung mit einem Antriebsmechanismus versehen ist, der die Verschiebung des auf der Kassette (8) angeordneten Stoffdachs erlaubt.

7. Fahrzeug nach Anspruch 6, **dadurch gekennzeichnet, dass** der Antriebsmechanismus einen Elektromotor aufweist, der ein Seil aufrollt oder abrollt, das in den Laufschienen (13) und den Profilen (12) gleitet, wobei dieses Seil mit den Schlitten der Dachvorrichtung verbunden ist.

8. Fahrzeug nach einem der Ansprüche 5 bis 7, **dadurch gekennzeichnet, dass** die Kassette (8) mit Einrastmitteln (17, 19) versehen ist, die die Längsausrichtung zwischen den Profilen (12) der Dachrelingen (6) und den Laufschienen (13) der Kassette (8) gewährleisten.

9. Fahrzeug nach einem der Ansprüche 1 bis 8, **dadurch gekennzeichnet, dass** es ein Mittel zum Verriegeln der Kassette (8) an den Relingen (6) umfasst, wobei dieses Verriegelungsmittel mindestens einen Bolzen (21) aufweist, der an einem Oberteil der Kassette angeordnet ist und dazu bestimmt ist, mit einem Führungselement (22) zusammenzuwirken, das an den Relingen vorgesehen ist, sowie Stifte (16), die am Ober- und Unterteil der Kassette angeordnet sind und dazu bestimmt sind, mit Löchern zusammenzuwirken, die in der Fahrzeugstruktur hergestellt sind.

10. Fahrzeug nach einem der vorherigen Ansprüche, **dadurch gekennzeichnet, dass** die Kassette (8) Führungsmittel (510) aufweist, die die Kassette (8) mit der Fahrzeugstruktur verbinden und dazu bestimmt sind, das Abmontieren dieser Letzteren und ihre Unterbringung in einer Aufnahme zu erlauben, die im Kofferraum des Fahrzeugs vorgesehen ist, wenn die Dachvorrichtung sich in der auf der Kassette (8) zusammengefalteten Endposition befindet.

11. Fahrzeug nach Anspruch 10, **dadurch gekennzeichnet, dass** die Führungsmittel (510) aus zwei Stangen bestehen, die jeweils beiderseits der Kassette (8) angeordnet sind, wobei jede dieser Stangen (510) an ihren freien Enden an einer der Seitenwände (530) der Fahrzeugkarosserie zum einen und an der Laufschiene (13) zum anderen angelenkt ist, wobei das untere freie Ende jeder Laufschiene (13) im Wesentlichen einer entsprechenden Seitenwand (530) gegenüberliegend angeordnet ist.

12. Fahrzeug nach Anspruch 10 oder 11, **dadurch gekennzeichnet, dass** die Kassette (8) eine Ausgleichsvorrichtung (520) aufweist, bestehend aus einem Teleskopzylinder, der einerseits mit einer Stange (510) und andrerseits an der Struktur angelenkt ist.

13. Fahrzeug nach Anspruch 10, **dadurch gekennzeichnet, dass** die Führungsmittel (510) aus zwei im Wesentlichen vertikalen Holmen bestehen, die beiderseits der Kassette angeordnet sind, wobei jeder dieser Holme an einem seiner Enden im Wesentlichen auf der Höhe des Mittelteils der Kassette fest verbunden ist und geeignet ist, an seinem entgegengesetzten Ende um eine Querachse (510a) an eine der Seitenwände (53) des Fahrzeugs angelenkt zu werden.

14. Fahrzeug nach Anspruch 10 oder 13, **dadurch gekennzeichnet, dass** die Kassette (8) eine Ausgleichsvorrichtung (520) aufweist, die aus einer Spiralfeder besteht, die koaxial auf jeder der Gelenkachsen der Holme montiert ist, wobei eines der Enden der Feder mit dem Holm verbunden ist und das andere Ende geeignet ist, mit der Seitenwand der Karosserie verbunden zu werden.

15. Fahrzeug nach Anspruch 10, **dadurch gekennzeichnet, dass** die Führungsmittel (510) aus zwei Stangen bestehen, die jeweils beiderseits der Kassette (8) angeordnet sind, wobei jede dieser Stangen (510) an ihren freien Enden um eine Querachse (520) einerseits an der Laufschiene (13) angelenkt ist, im Wesentlichen an ihrem unteren Ende, und andrerseits an einer Querachse (530), die das untere Gelenk formt, mit dem Boden der Aufnahme (50) fest verbunden ist und im Wesentlichen in ihren hinteren Abschnitt angeordnet ist.

16. Fahrzeug nach Anspruch 10 oder 15, **dadurch gekennzeichnet, dass** die zwei Stangen (510) über ihre jeweilige, als unteres Gelenk bezeichnete Gelenkachse (530) fest miteinander verbunden sind, die durch eine horizontale Verlängerung (530a) der Stangen (510) geschlossen wird, wobei diese Verlängerung (530a) von zwei Lagern (540) umschlossen ist, die in Bezug auf zu eine Längsmittelachse des Fahrzeugs symmetrisch angeordnet sind, wobei jedes dieser Lager (540) mit dem Boden der Aufnahme (50) fest verbunden ist.

17. Fahrzeug nach einem der vorherigen Ansprüche, **dadurch gekennzeichnet, dass** es eine Aufnahme (30) aufweist, die im Fahrzeugboden des Kofferraums vorgesehen ist, in welcher die Kassette (8) untergebracht werden kann.

18. Fahrzeug nach Anspruch 17, **dadurch gekennzeichnet, dass** die Aufnahme (30) von einem Doppelboden bedeckt ist, der auf Längsgleitschienen montiert ist.

19. Fahrzeug nach Anspruch 17 oder 18, **dadurch gekennzeichnet, dass** jede der Dachrelingen (6) abmontiert werden kann und an einem ihrer freien Enden mit einem Mechanismus zur Befestigung an die Fahrzeugstruktur und mit einem Mittel zum Einrasten jeder Reling mit der Struktur versehen ist.

20. Fahrzeug nach einem der Ansprüche 17 bis 19, **dadurch gekennzeichnet, dass** jede der Relingen (6) fest auf der Karosserie angebracht ist und in ihrem Mittelteil entlang einer im Wesentlichen vertikalen Achse gelenkig ist, was durch Umschwenken, Nähern und gegenseitiges Verriegeln der vorderen Abschnitte jeder Reling (6) die Formung eines Überrollbügels erlaubt.
